# EUROPEAN PATENT APPLICATION

(11) **EP 4 783 085 A1**
(43) Date of publication of application: **29.07.2026**
(21) Application number: 24867778.3
(22) Date of filing: 20.02.2024
(51) Int. Cl.: G06Q 10/0637

(54) **WORK PLAN DRAFTING DEVICE**

(30) Priority: 19.09.2023 JP 2023151081
(71) Applicant: Hitachi, Ltd., Tokyo 100-8280 (JP)
(72) Inventor: YAMAMOTO, Masashi, Tokyo 100-8280 (JP); MORIBE, Hirotaka, Tokyo 100-8280 (JP); MATSUBA, Hiroya, Tokyo 100-8280 (JP); MATSUDA, Shinji, Tokyo 100-8280 (JP); WATANABE, Tohru, Tokyo 100-8280 (JP)
(74) Representative: MERH-IP Matias Erny Reichl Hoffmann Patentanwälte PartG mbB
(86) International application number: PCT/JP2024/005926
(87) International publication number: WO 2025/062686

(57) **Abstract**

A work plan formulation device (7) includes: a storage unit that stores a plurality of tasks and task information (task list (D1)) that is information regarding the tasks; a task bundling unit (3) that generates a plurality of task groups by bundling a plurality of the tasks on the basis of the task information and assigns the same bundling identification number to tasks allocated to the same task group; and a work planning unit (4) that allocates tasks assigned with the same bundling identification number to the same resource. The storage unit stores a bundling policy (bundling policy information (D2)) including a constraint condition between a plurality of generated task groups, and the task bundling unit (3) generates a task group on the basis of the bundling policy.

## Description

### Technical Field

The present invention relates to a work plan formulation device that formulates a work plan regarding work (task) performed by resources including humans and physical materials while grouping a plurality of tasks into a single unit.

### Background Art

In recent years, introduction of field service management (FSM) has been promoted in each industry. The FSM is generally equipped with a function of supporting generation of a task, formulation of a work plan for allocation to a resource, and progress management of actual site work. Here, the resource refers to an individual human resource such as a worker, a group, a team, or a business entity composed of a plurality of human resources, a physical resource such as a material, or the like. In particular, in formulation of a work plan, not only manual resource allocation using a user interface (hereinafter, UI) but also resource allocation using calculation such as machine learning has been developed, and further sophistication is required. In the work plan described above, tasks are usually handled individually one by one, and allocated to the same or different resources in time series. On the other hand, depending on the business entity, there is a need to reduce movement time, material usage fee, labor cost, work commission cost, and the like related to the same resource by grouping together (hereinafter, expressed as bundling) a plurality of tasks in a format such as piggyback work and allocating them to the same resource. In addition, especially regarding human resources, when performing a plurality of tasks, it may be necessary to consider reducing worker overtime and ensuring that the tasks do not consist only of low-satisfaction tasks or heavy labor.

As a background art of the present technical field, there is the invention described in PTL 1. The abstract of this document describes that "Provided is a method of workflow allocation including: determining, for each of a plurality of tasks, one or more task parameters associated with the task; and generating, for an actionable event, a workflow in which each of one or more individuals performs at least one of the plurality of tasks, on the basis of the one or more task parameters".

### Citation List

### Patent Literature

PTL 1: JP 2022-527961 A

### Non Patent Literature

NPL 1: Ishii: "Job Satisfaction and Working Difficulties Seen in Questionnaires at Welfare and Nursing Care Sites", Course of Social Welfare Science, Vol. 1 (2009)
NPL 2: Kanaoka: "Job Satisfaction of Employees in Agricultural Corporations and Improvement Methods", Hokkaido Agricultural Research Center Agricultural Management Research, Issue 108, p. 54-66 (2013)
NPL 3: Ohno: "A Study on Ryokan Work, Ease of Working, and Job Satisfaction -Based on Voices of Front Service Employees in Customer Service Department of Ikaho Onsen Ryokan Hotel Tenbo-", Journal of Japan Institute of Tourism Research, Vol. 28, No. 2, p. 57-67 (2017)

### Summary of Invention

### Technical Problem

According to NPLs 1 to 3, when a task is allocated to a resource, it is important to consider an influence on an individual resource such as an amount, difficulty, and a working environment of the task separately from an influence on the entire business entity such as operational efficiency and business expenditure. According to PTL 1, it is possible to formulate a work plan for individually allocating each task to a human resource in consideration of task priority, necessary skill, time related to task execution, and the like. However, when a plurality of tasks are grouped together to allocate them to the same resource, it is difficult to appropriately implement improvement of operational efficiency, reduction of business expenditure, improvement of a working environment, and the like according to needs of a business or a business entity.

In this regard, an object of the present invention is to provide a work plan formulation device capable of allocating a plurality of tasks to the same resource according to an object emphasized by a business entity.

### Solution to Problem

In order to achieve the object, a work plan formulation device of the present invention includes: a storage unit that stores a plurality of tasks and task information that is information on the tasks; a task bundling unit that generates a plurality of task groups by bundling a plurality of the tasks on the basis of the task information and assigns the same bundling identification number to tasks allocated to the same task group; and a work planning unit that allocates tasks assigned with the same bundling identification number to the same resource. Other aspects of the present invention will be described in the following embodiment.

### Advantageous Effects of Invention

According to the present invention, it is possible to formulate a work plan for allocating a plurality of tasks to the same resource according to a purpose emphasized by a business entity, such as improvement of operational efficiency, reduction of business expenditure, and improvement of a working environment.

### Brief Description of Drawings

[FIG. 1A] FIG. 1A is a block diagram illustrating functions of a work plan formulation device according to an embodiment.
[FIG. 1B] FIG. 1B is a block diagram illustrating a computer of the work plan formulation device according to the embodiment.
[FIG. 2] FIG. 2 is a diagram illustrating an example of a task list among various types of information held in a large-capacity storage unit DB.
[FIG. 3] FIG. 3 is a diagram illustrating an example of bundling policy information among various types of information held in the large-capacity storage unit DB.
[FIG. 4] FIG. 4 is a flowchart illustrating processing of a task bundling unit.
[FIG. 5] FIG. 5 is a diagram illustrating an example of a task list D1 assigned with a bundling identification number through the processing of the task bundling unit.
[FIG. 6] FIG. 6 is a flowchart illustrating processing of a work planning unit.
[FIG. 7] FIG. 7 is a flowchart illustrating processing of a screen output unit.
[FIG. 8] FIG. 8 is a diagram illustrating an example of a screen output by the screen output unit.

### Description of Embodiments

Hereinafter, an embodiment of the present invention will be described in detail with reference to the drawings.

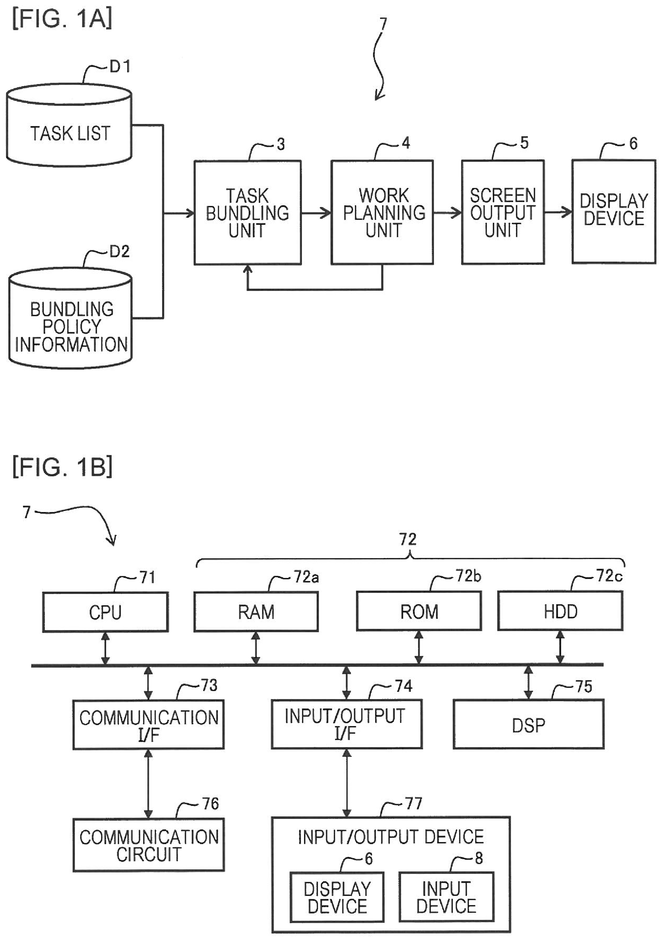

FIG. 1A is a block diagram illustrating functions of a work plan formulation device 7 according to the embodiment. FIG. 1B is a block diagram illustrating a computer of the work plan formulation device 7 according to the embodiment. The work plan formulation device 7 is a work plan formulation device that associates tasks and resources in time series.

In FIG. 1B, the computer of the work plan formulation device 7 includes a central processing unit (CPU) 71, a storage unit 72, a communication interface (I/F) 73, an input/output I/F 74, and a digital signal processor (DSP) 75. Here, the storage unit 72 includes a RAM 72a, a ROM 72b, and an HDD 72c (hard disk). The communication I/F 73 is connected to a communication circuit 76. The input/output I/F 74 is connected to an input/output device 77 (for example, a display device 6 and an input device 8). The ROM 72b stores programs executed by the CPU 71 and the DSP 75, various types of data, and the like. The CPU 71 and the DSP 75 implement various functions by executing these programs. Here, the HDD 72c corresponds to a nonvolatile large-capacity storage unit DB. . Note that the present embodiment is not limited to a single device, and may be implemented as a work planning system in which a plurality of servers and the like cooperate.

The work plan formulation device 7 implemented by using a computer includes functions of a task bundling unit 3, a work planning unit 4, and a screen output unit 5 when processing content in its processing unit CPU is expressed in terms of processing functions.

The task bundling unit 3 generates a plurality of task groups by bundling a plurality of tasks on the basis of the plurality of tasks and task information (task list D1) that is information regarding the tasks, and assigns the same bundling identification number for tasks allocated to the same task group. In addition, the task bundling unit 3 generates a task group on the basis of a bundling policy (bundling policy information D2) including a constraint condition between the plurality of generated task groups. The task bundling unit 3 executes mathematical optimization processing on the basis of the task information and the bundling policy to generate a task group.

The work planning unit 4 allocates tasks assigned with the same bundling identification number to the same resource. In addition, the work planning unit 4 plans that the same resource executes tasks in time series.

The work plan formulation device 7 further stores the task list D1 (task information), the bundling policy information D2 (bundling policy), and a work plan program Pr in the nonvolatile large-capacity storage unit DB.

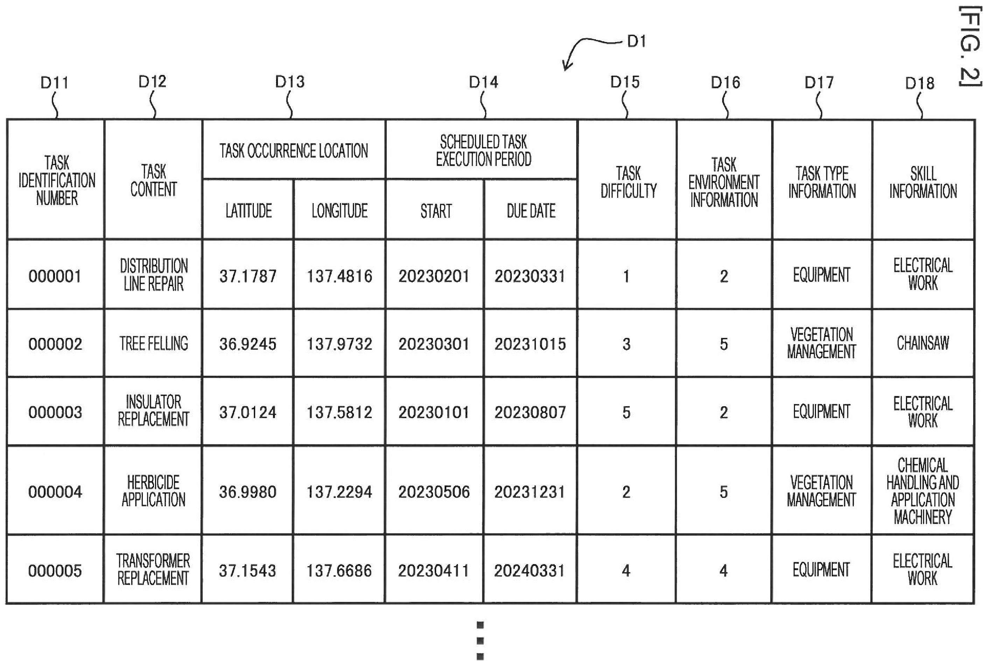

Various types of information held in the nonvolatile large-capacity storage unit DB in the work plan formulation device 7 of FIG. 1 will be described as follows. First, an example of the task list D1 is illustrated in FIG. 2.

FIG. 2 is a diagram illustrating an example of the task list D1 among various types of information held in the large-capacity storage unit DB. The task list D1 includes a task identification number D11, a task content D12, a task occurrence location D13, a scheduled task execution period D14, a task difficulty D15, task environment information D16, task type information D17, and skill information D18.

In the task identification number D11, a number for uniquely identifying a task is stored. The task content D12 stores the content of the task. In the task occurrence location D13, for example, information such as latitude and longitude is stored as a location where the task occurs. Here, the task occurrence location D13 is not limited to latitude and longitude, and may store information that can identify a position. In the scheduled task execution period D14, as a period in which the task is scheduled to be executed, for example, a scheduled start date of the task, a due date of the task, and the like are stored.

In the task difficulty D15, as a value obtained by classifying difficulty for each task into levels, for example, values of 1 to 5 or the like are stored in order from simplest. In the task environment information D16, as values indicating whether an execution environment for each task is well-maintained or poor (or dangerous), for example, values of 1 to 5 or the like are stored in order of poorest or most dangerous. In the task type information D17, for example, information indicating a classification of tasks such as whether the task is a task related to equipment or a task related to surrounding environment maintenance is stored. It is assumed that various values depending on the business entity are stored for the level classification of the difficulty of each task and the environment, and task types, and the present invention is not limited to the above. In the skill information D18, information indicating a skill necessary for executing the task is stored.

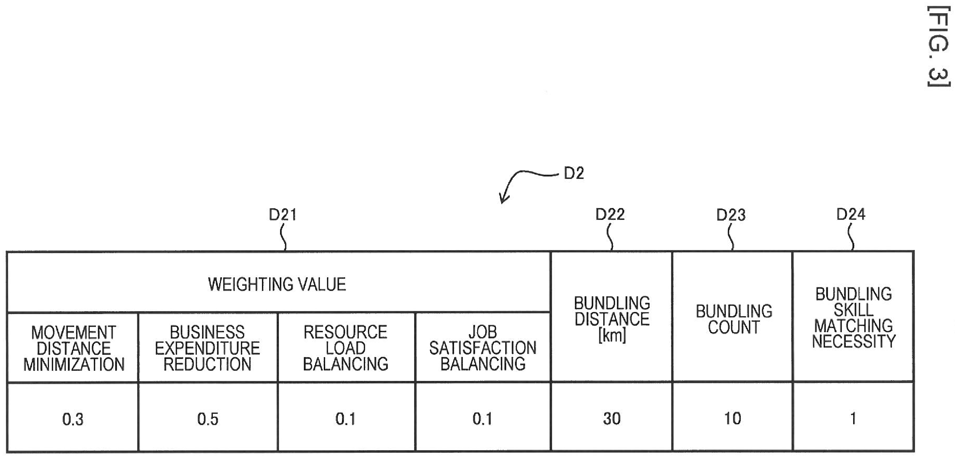

FIG. 3 is a diagram illustrating an example of the bundling policy information D2 among various types of information held in the large-capacity storage unit DB. The bundling policy information D2 is importance (for example, a weighting value D21) of each index that is emphasized at the time of bundling, and information indicating a value of a variable serving as a constraint at the time of bundling (for example, a bundling distance D22, a bundling count D23, and a bundling skill matching necessity D24). Examples of the index include movement distance minimization, business expenditure reduction, resource load balancing, and job satisfaction balancing. That is, the task bundling unit 3 generates an index related to a load on resources when combining a plurality of tasks, job satisfaction of human resources, or motivation. Note that the job satisfaction represents the sense of reward or accomplishment related to execution of tasks by human resources. As described above, the resource refers to an individual human resource such as a worker, a group, a team, or a business entity composed of a plurality of human resources, a physical resource such as a material, or the like.

The bundling policy information D2 here includes the weighting value D21, the bundling distance D22, the bundling count D23, and the bundling skill matching necessity D24. In the weighting value D21, a weighting value indicating the importance for each index emphasized at the time of bundling is stored. In the bundling distance D22, information on the maximum distance between tasks to be bundled is stored. In the bundling count D23, information on the maximum number of tasks to be bundled is stored. In the bundling skill matching necessity D24, information regarding whether skills necessary for tasks to be bundled need to match is stored. For example, 1 is stored if there is a need for matching, and 0 is stored if there is no need for matching.

The present embodiment does not limit the content of the task to be executed and the field to be utilized, but for ease of understanding, equipment maintenance and vegetation management work in a power system field will be described as an example.

Returning to FIG. 1, various processing functions executed by the CPU 71 will be described.

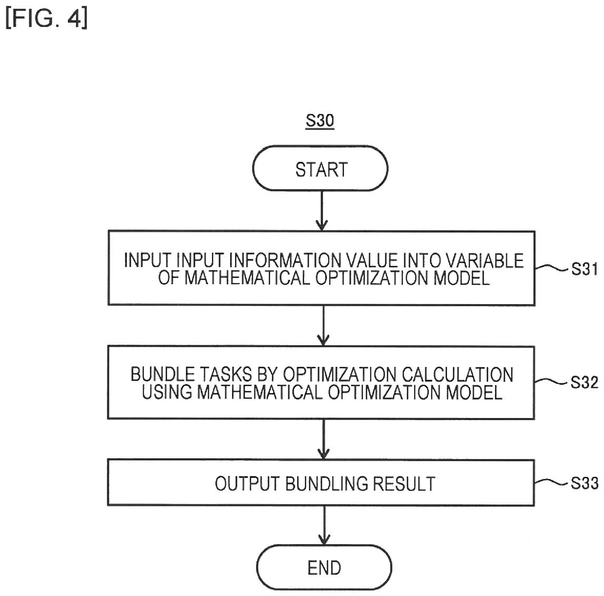

First, the task bundling unit 3 is a functional unit that bundles tasks on the basis of the task list D1 and the bundling policy information D2, and processing thereof will be described with reference to FIG. 4.

FIG. 4 is a flowchart illustrating processing S30 of the task bundling unit 3. In the first processing step S31 of the flow of FIG. 4, an input information value from the task list D1 and the bundling policy information D2 is input to a variable of a mathematical optimization model. Accordingly, for example, a mathematical optimization model having the following objective function and constraint is generated.

### (Objective function)

The objective function of the optimization model is generated on the basis of various indexes. Hereinafter, examples of the indexes will be described.

For example, the operational efficiency can be improved by calculating and minimizing a distance or a movement time between tasks to be bundled. The distance between the tasks to be bundled is calculated with reference to the task occurrence location D13.

In addition, for example, by summing and maximizing the number of tasks to be bundled, a plurality of tasks can be executed together, and business expenditures such as expenses related to physical resources and labor costs related to human resources can be reduced.

In addition, for example, the load of each resource can be balanced by taking a standard deviation for each bundled task group with respect to the number of tasks to be bundled and minimizing the number of tasks.

In addition, for example, the load and job satisfaction of each resource can be balanced by minimizing the total standard deviation of the average for each bundled task group with respect to the average of all the tasks regarding the difficulty of tasks to be bundled. Here, as described above, the job satisfaction represents the sense of reward or accomplishment related to execution of tasks by human resources, and it is assumed that the job satisfaction can be felt by executing tasks of appropriate difficulty that are neither excessively low nor excessively high. For the difficulty of a task to be bundled, the task difficulty D15 is referred to.

In addition, for example, load balancing and motivation management of each resource can be performed by minimizing the standard deviation of the average of each bundled task group with respect to the average of all the tasks regarding the value indicating whether the execution environment for the task to be bundled is poor. Here, the motivation represents task execution motivation of a human resource, and here, it is assumed that the motivation is maintained by executing a task in a non-poor site environment. For the environment level of the task to be bundled, the task environment information D16 is referred to.

The indexes as described above are examples, and other indexes may be defined. The indexes as described above are multiplied by a weighting value with reference to the weighting value D21 in the bundling policy information D2, and all are summed (in a case where a maximization problem and a minimization problem are mixed, a negative sign is applied to one side for summation) to obtain an objective function. Accordingly, optimal bundling according to the policy of the business entity can be achieved. Hereinafter, a plurality of bundled tasks will be referred to as a task group or a bundled task group.

### (Constraint on optimization model)

In addition, the constraint of the optimization model includes, for example, the following five. The first is to limit the maximum distance between occurrence locations of tasks to be bundled. The maximum distance between the tasks to be bundled is determined on the basis of the bundling distance D22. Accordingly, it is possible to prevent a situation in which bundling instead leads to the same resource moving for a long distance, resulting in operational inefficiency.

The second is to limit the maximum number of tasks to be bundled into one task. The maximum number of tasks to be bundled is determined on the basis of the bundling count D23. Accordingly, it is possible to prevent a situation in which the same resource is used or worked for excessive continuous hours or a situation in which the same resource cannot complete all tasks in the bundling group.

The third is not to bundle tasks having no overlap in their scheduled execution periods. For the scheduled execution period of the task, the scheduled task execution period D14 is referred to. Accordingly, it is possible to avoid bundling tasks outside the scheduled execution period.

The fourth is not to bundle a task of a specific classification and a task of another specific classification. For the task classification, the task type information D17 is referred to. Accordingly, it is possible to prevent bundling tasks executed by clearly different resources. Note that, depending on the business or business entity, a case may also be assumed in which there is a need to bundle only a task of a certain specific classification with a task of another specific classification, and in this case, this constraint is not imposed or a constraint is imposed to bundle only tasks of the classification.

The fifth is not to bundle tasks having different skills necessary for task execution. For the skill necessary for task execution, the skill information D18 and the bundling skill matching necessity D24 are referred to. Accordingly, it is possible to avoid task execution by a human resource who does not have the necessary skill. Note that, depending on a business or business entity, there is a case where education is provided by intentionally causing a human resource who does not have a skill necessary for a certain task to perform the task, and in such a case, it is not necessary to impose this constraint. In addition, even in a case where a bundled task group is allocated to a group, a team, a business entity, or the like composed of a plurality of human resources, it is not necessary to impose this constraint.

The above five constraints are examples, and may be flexibly changed according to a policy of a business entity. In addition, even in a case where there is feedback from the work planning unit 4 to be described later, similarly, a value is input by overwriting the variable of the mathematical optimization model. This will be described later in detail in the description of the work planning unit 4.

Next, in processing step S32 of FIG. 4, optimization calculation (mathematical optimization processing) using the mathematical optimization model generated in processing step S31 is performed, and tasks are bundled. Accordingly, tasks to be allocated to the same resource can be extracted according to the bundling policy. Note that a case where there is no task to be bundled is also considered one of solutions.

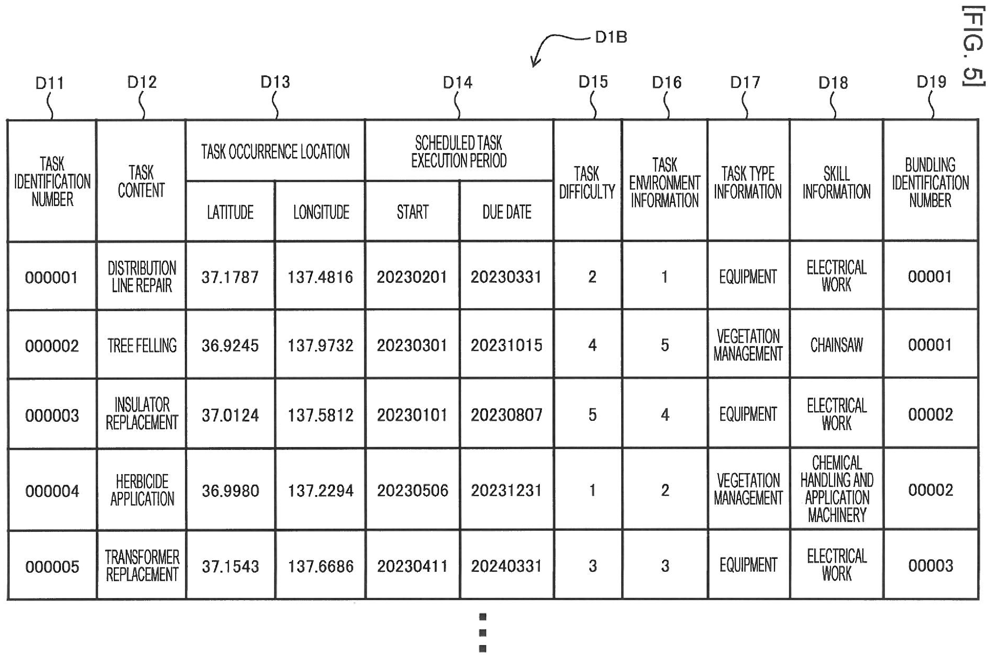

Next, in processing step S33 of FIG. 4, a result of bundling calculated in processing step S32 is output. FIG. 5 illustrates an output example of the bundling result.

FIG. 5 is a diagram illustrating an example of a task list D1B assigned with a bundling identification number through the processing S30 of the task bundling unit 3. The bundling result is output by adding a column of a bundling identification number D19 to the task list D1 (see FIG. 2), for example. In the bundling identification number D19, for example, the same identification number may be stored in tasks of the same bundled task group. At this time, as bundling identification number of a task that is not bundled, a bundling identification number that does not overlap with that of another task is stored.

In addition, for example, all the task identification numbers of tasks constituting the same bundled task group may be stored. At this time, nothing is stored in the bundling identification number D19 of a task that is not bundled. A method of assigning the bundling identification number as described above is an example, and the bundling identification number may be flexibly changed according to a business, a business entity, or a work planning method. Hereinafter, for the bundling identification number, as illustrated in FIG. 5, an embodiment will be described assuming an example in which the same identification number is stored in tasks of the same bundled task group. The task list assigned with the bundling identification number D19 is input to the work planning unit 4 and the screen output unit 5 to be described later.

FIG. 5 illustrates an example in which bundling is performed in consideration of the task difficulty D15 and the task environment information D16. The average values of the values indicating the difficulty of each bundled task group assigned with the same bundling identification number and whether or not the execution environment of the task is deteriorated are all 3, and it can be seen that these values are balanced without variation for each bundled task group (that is, for each resource to which the task of the bundled task group is scheduled to be allocated).

Specifically, the identification numbers assigned with the bundling identification number 0001 are 00001 and 00002, and when referring to the task difficulty D15, the task difficulty values are 2 and 4, and the average value thereof is 3. Similarly, when referring to the task environment information D16, the values of the task environment information are 1 and 5, and the average value thereof is 3.

Further, the identification numbers assigned with the bundling identification number 0002 are 00003 and 00004, and when referring to the task difficulty D15, the task difficulty values are 5 and 1, and the average value thereof is 3. Similarly, when referring to the task environment information D16, the values of the task environment information are 4 and 2, and the average value thereof is 3.

As in the same example, according to the present embodiment, the task group to be allocated can be optimized in consideration of the relationship of the index between the task groups allocated to the same resource. That is, the generated task groups satisfy a predetermined relationship with another task group. In addition, FIG. 5 assumes task allocation to a group composed of a plurality of human resources having different skills.

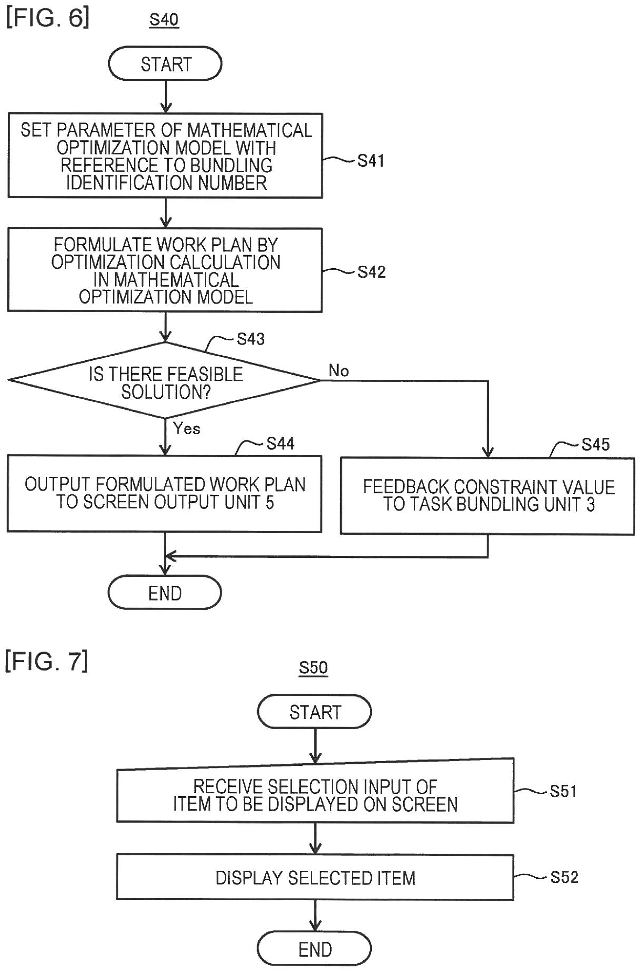

FIG. 6 is a flowchart illustrating processing S40 of the work planning unit 4. In the first processing step S41 of the flow of FIG. 6, with reference to the bundling identification number D19 (see FIG. 5), for example, an objective function or a constraint considering task bundling is set as a sub-problem in a mathematical optimization model such as a traveling salesman problem. Accordingly, it is possible to formulate a work plan in consideration of task bundling.

Hereinafter, an example of the objective function or the constraint will be described.

In a case where the bundling identification number D19 is considered in the objective function, for example, the number of tasks having the same bundling identification number allocated to the same resource is set to be maximized. Accordingly, the work plan can be formulated while bundling as many tasks as possible.

In a case where the bundling identification number D19 is considered in the constraint, for example, tasks having the same bundling identification number are set to be always allocated to the same resource. Accordingly, it is possible to formulate a work plan that incorporates the output result of the task bundling unit 3. At this time, depending on the output result of the task bundling unit 3, there is a case where there is no feasible solution in a mathematical optimization problem of the work planning unit 4 (processing step S43, No). In this case, processing step S45 to be described later is performed.

Next, in processing step S42 of FIG. 6, optimization calculation using the mathematical optimization model generated in processing step S41 is performed. Accordingly, it is possible to formulate a work plan in consideration of tasks to be allocated to the same resource according to the bundling policy. Here, if there is a feasible solution (processing step S43, Yes), the formulated work plan is used as an input to the screen output unit 5 to be described later, the formulated work plan is output to the display device 6 (processing step S44), and the processing is ended. On the other hand, if there is no feasible solution (processing step S43, No), processing step S45 is performed.

In processing step S45 of FIG. 6, a value is fed back to the task bundling unit 3. The value to be fed back is, for example, the maximum distance between tasks to be bundled as a substitute for the bundling distance D22 (see FIG. 3), and is a value smaller than the value set in the mathematical optimization model of the task bundling unit 3. Alternatively, the value to be fed back is, for example, the maximum number of tasks to be bundled as a substitute for the bundling count D23 (see FIG. 3), and is an integer smaller than the value set in the task bundling unit 3. Alternatively, both of the above may be fed back. Accordingly, task bundling is suppressed, and when the work planning unit 4 formulates a work plan again, a task bundling result considered as a constraint is relaxed, making it easier to avoid a situation in which there is no feasible solution. The feedback described above is an example, and the present invention is not limited thereto as long as it is a constraint that suppresses the task bundling in the task bundling unit 3.

As long as the feedback occurs, the task bundling unit 3 and the work planning unit 4 are repeated to formulate a work plan that retains task bundling as much as possible. In addition, in a case where there is no task to be bundled in the task bundling unit 3 and there is no feasible solution in the work planning unit 4, the objective function and the constraint in the mathematical optimization model such as a traveling salesman problem serving as the base of the work planning unit 4 are arbitrarily changed, and the processing is performed again from processing step S31. After the work plan is formulated, the processing is ended and the work plan is provided as an input to the screen output unit 5 to be described later.

FIG. 7 is a flowchart illustrating an example of processing S50 of the screen output unit 5. The screen output unit 5 is a functional unit that selects and displays content to be displayed on the display device 6, and processing thereof will be described with reference to FIG. 7. Note that the display device 6 includes, for example, a liquid crystal panel, an organic electro luminescence (EL) panel, or the like, and displays display content or the like selected by an operator.

In the processing of the screen output unit 5 in FIG. 7, in processing step S51, selection input of an item to be displayed on the screen is received, selection input of an item to be displayed on the screen is received, and in processing step S52, the selected item is displayed.

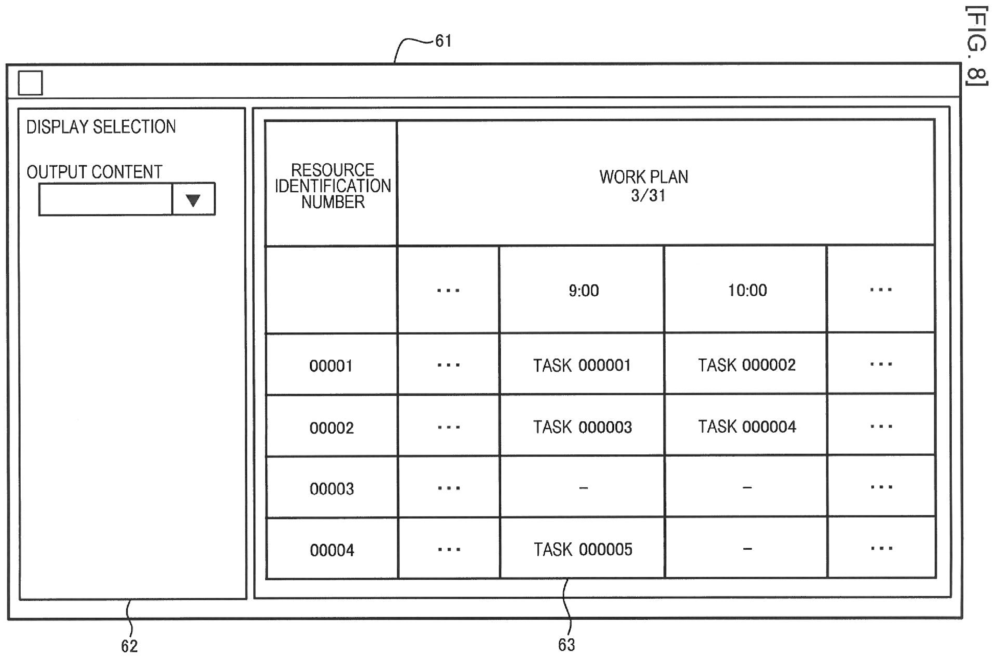

Next, a configuration example of a screen 61 in FIG. 8 will be described.

FIG. 8 is a diagram illustrating a screen example output by the screen output unit 5. The screen includes a plurality of panes (a display content selection pane 62 and a result output pane 63) which are small areas obtained by dividing the screen. On the screen 61 displayed on the display device 6, the display content selected by the screen output unit 5 is displayed.

The display content selection pane 62 is a display for the operator to operate and select the display content to be selected in the screen output unit 5. Accordingly, the display content selected in the display content selection pane 62 is displayed in another pane. As a selectable factor, a task list including a bundling identification number, a work plan, and the like are prepared. When these items are selected, selection input of the item to be displayed on the screen is received and processed in processing step S51 of the screen output unit 5 of FIG. 15. Thereafter, in processing step S52 of the screen output unit 5 in FIG. 15, a display screen corresponding to the selected content is displayed in the result output pane 63.

In the result output pane 63, a task list that is an output of the task bundling unit 3 and a work plan that is an output of the work planning unit 4 are displayed. The task list includes a bundling identification number. Accordingly, it is possible to determine which other tasks each task is bundled with, or whether each task is not bundled with any other tasks. The work plan is displayed, for example, in a format such as a Gantt chart. Accordingly, it is possible to determine when each resource is to perform which task.

According to the example of FIG. 8, in a case where the resource identification number is 0001, it is planned to execute the task with the task identification number 000001 (task 000001) and then execute the task with the task identification number 000002 (task 000002). In addition, in a case where the resource identification number is 0002, it is planned to execute the task with the task identification number 000003 (task 000003) and then execute the task with the task identification number 000004 (task 000004). That is, it is planned that a plurality of tasks are associated with the same resource on the basis of the bundling identification numbers, and the same resource executes the tasks in time series.

When the business is developed using the work plan formulation device 7 according to the present embodiment, several forms can be considered as examples. For example, there may be a form in which a business entity using the work plan formulation device 7 creates a work plan, and the business entity operates resources on the basis of the work plan.

In addition, for example, a certain business entity may create a work plan using the work plan formulation device 7, and request another business entity to perform work and secure resources based on the work plan.

In addition, for example, a certain business entity can perform only task bundling using the work plan formulation device 7, and request another business entity to perform a work plan, work, or the like on the basis of a task list assigned with a bundling identification number. As in the last example, in the present embodiment, the functions of the task bundling unit 3 or the work planning unit 4 can each be used as a single unit by using the bundling identification number as an interface. Therefore, it can be also implemented in a form of microservices, for example, by constructing the task bundling unit 3 and the work planning unit 4 as separate devices or by later adding the functions of one to the same device.

Incidentally, the present invention is not limited to the above-described embodiments, and various modifications are included. For example, the above-described embodiments have been described in detail for easy understanding of the present invention and are not necessarily limited to those having all the described configurations. A part of the configuration of a certain embodiment can be replaced with the configuration of another embodiment, and the configuration of another embodiment can be added to the configuration of a certain embodiment. In addition, it is also possible to add, delete, and replace other configurations for a part of the configuration of each embodiment.

Each of the above-described configurations, functions, processing units, processing means, and the like may be realized in part or in whole by hardware, for example, an integrated circuit. Each of the above-described configurations, functions, and the like may be realized by software by a processor interpreting and executing a program for realizing each function. Information such as a program, a table, and a file for realizing each function can be stored in a recording device such as a memory, a hard disk, and a solid state drive (SSD), or a recording medium such as a flash memory card and a digital versatile disk (DVD).

In each embodiment, the control lines and information lines indicate what is considered necessary for the explanation, and not all control lines and information lines on the product are necessarily shown. It may be considered that almost all the components are connected to each other in practice.

### Reference Signs List

- 3: task bundling unit
- 4: work planning unit
- 5: screen output unit
- 6: display device
- 7: work plan formulation device
- 8: input device
- 61: screen
- 62: display content selection pane
- 63: result output pane
- D1: task list (task information)
- D1B: task list (after bundling identification number is assigned)
- D11: task identification number
- D12: task content
- D13: task occurrence location
- D14: scheduled task execution period
- D15: task difficulty
- D16: task environment information
- D17: task type information
- D18: skill information
- D19: bundling identification number
- D2: bundling policy information (handling policy)
- D21: weighting value
- D22: bundling distance
- D23: bundling count
- D24: bundling skill matching necessity

## Claims

1. A work plan formulation device comprising:
a storage unit that stores a plurality of tasks and task information that is information on the tasks;
a task bundling unit that generates a plurality of task groups by bundling a plurality of the tasks on a basis of the task information and assigns the same bundling identification number to tasks allocated to the same task group; and
a work planning unit that allocates tasks assigned with the same bundling identification number to the same resource.

2. The work plan formulation device according to claim 1, wherein
the storage unit stores a bundling policy including a constraint condition between a plurality of generated task groups, and
the task bundling unit generates the task group on a basis of the bundling policy.

3. The work plan formulation device according to claim 2, wherein the task bundling unit generates the task group by executing mathematical optimization processing on the basis of the task information and the bundling policy.

4. The work plan formulation device according to claim 1, wherein the task bundling unit generates an index related to a load on a resource when combining a plurality of tasks, job satisfaction of a human resource, or motivation.

5. The work plan formulation device according to claim 3, wherein the task bundling unit maximizes the number of tasks having the same bundling identification number associated with the same resource, as an objective function of mathematical optimization.

6. The work plan formulation device according to claim 3, wherein when the work planning unit is not able to output a feasible solution, the work planning unit feeds back the fact to the task bundling unit and adds a constraint to a mathematical optimization problem.

7. The work plan formulation device according to claim 3, wherein the task bundling unit balances a load on the resource by taking a standard deviation for each task group with respect to the number of tasks to be bundled and minimizing the number of tasks.

8. The work plan formulation device according to claim 3, wherein the task bundling unit balances a load on the resource by minimizing a total standard deviation of an average for each task group with respect to an average of all tasks regarding difficulty of tasks to be bundled.

9. The work plan formulation device according to claim 3, wherein the task bundling unit balances a load on the resource by minimizing a standard deviation of an average for each task group with respect to an average of all tasks regarding a value indicating whether an execution environment of a task to be bundled is poor.

10. A work plan formulation device that bundles a plurality of tasks and generates a plurality of task groups, the work plan formulation device comprising:
a storage unit that stores a bundling policy including a constraint condition between a plurality of generated task groups; and
a task bundling unit that generates a plurality of the task groups so as to satisfy the bundling policy.

11. A work plan formulation device that bundles a plurality of tasks and generates a plurality of task groups, wherein
the generated task groups satisfy a predetermined relationship with another task group.
